# EUROPÄISCHE PATENTSCHRIFT

(11) **EP 3 681 831 B1**
(45) Veröffentlichungstag und Bekanntmachung des Hinweises auf die Patenterteilung: **09.06.2021**
(21) Anmeldenummer: 18769680.2
(22) Anmeldetag: 13.09.2018
(51) Int. Cl.: B65G 63/00, B65G 63/04, G05D 1/02, G08G 1/16

(54) **VERFAHREN ZUR STEUERUNG DES BEFAHRENS EINER ÜBERGABEZONE FÜR CONTAINER VON TRANSPORTFAHRZEUGEN IN EINER UMSCHLAGANLAGE FÜR CONTAINER, STEUERUNGSSYSTEM HIERFÜR UND UMSCHLAGANLAGE MIT EINEM SOLCHEN STEUERUNGSSYSTEM**
METHOD FOR CONTROLLING TRAVEL WITHIN A TRANSFER ZONE FOR CONTAINERS OF TRANSPORT VEHICLES IN A TERMINAL FOR CONTAINERS, CONTROL SYSTEM FOR SAME, AND TERMINAL COMPRISING A CONTROL SYSTEM OF THIS KIND
PROCÉDÉ DE GESTION DU PASSAGE DE CONTENEURS DE VÉHICULES DE TRANSPORT DANS UNE ZONE DE TRANSFERT DANS UNE INSTALLATION DE TRANSBORDEMENT DE CONTENEURS, SYSTÈME DE GESTION AFFÉRENT ET INSTALLATION DE TRANSBORDEMENT MUNIE DUDIT SYSTÈME DE GESTION

(30) Priorität: 15.09.2017 DE 102017121496
(43) Veröffentlichungstag der Anmeldung: 22.07.2020
(73) Patentinhaber: Konecranes Global Corporation, 05830 Hyvinkää (FI)
(72) Erfinder: POLLAK VON EMHOFEN, Sascha, 50226 Frechen (DE)
(74) Vertreter: Moser Götze & Partner Patentanwälte mbB
(86) Internationale Anmeldenummer: PCT/EP2018/074792
(87) Internationale Veröffentlichungsnummer: WO 2019/053150

(56) Entgegenhaltungen:
- EP-A1- 2 637 954
- JP-A- 2005 225 662
- JP-A- 2005 239 314
- JP-B1- 2 975 594

## Beschreibung

Die Erfindung betrifft ein Verfahren gemäß dem Oberbegriff von Anspruch 1, ein Steuerungssystem gemäß dem Oberbegriff von Anspruch 8 sowie eine Umschlaganlage gemäß dem Oberbegriff von Anspruch 12.

Transportfahrzeuge für Container im Sinne der vorliegenden Erfindung sind beispielsweise Portalhubgeräte, die beispielsweise aus der DE 10 2011 001 847 A1 bekannt sind. Derartige Portalhubgeräte werden auch als Portalhubwagen, Portalhubstapler, Portalhubstapelwagen, Portalstapelwagen, Straddle Carrier, Van Carrier, Shuttle Carrier, Sprinter Carrier oder Runner bezeichnet. Üblicherweise weisen Portalhubgeräte einen spinnenbeinartigen Aufbau mit einer Hubvorrichtung auf, über die ein als Spreader oder Spreaderrahmen bezeichnetes Lastaufnahmemittel heb- und senkbar ist, um Container aufnehmen, anheben und nach einem Transport an einem Zielort wieder abstellen und somit abgeben zu können. An ihrem oberen Ende sind hierfür vier Portalstützen üblicherweise durch einen Oberrahmen zu einem u-förmigen und nach unten offenen Portalrahmen miteinander verbunden, der von den Portalstützen getragen wird und an dem die Hubvorrichtung angeordnet ist. Durch den spinnenbeinartigen Aufbau des Portalrahmens, der die vier in den Ecken eines gedachten Rechtecks angeordneten starren Portalstützen aufweist, können Portalhubgeräte einen auf dem Boden oder auf einem anderen Container ruhenden Container beziehungsweise eine Containerreihe der Länge nach überfahren und hierbei zusätzlich je nach Bauweise auch einen angehobenen Container transportieren. Je nach Bauhöhe werden die Portalhubgeräte beispielsweise als 1 über 3-Geräte, 1 über 2- Geräte usw. bezeichnet. Ein 1 über 3-Gerät kann kollisionsfrei über drei gestapelte Container mit einem aufgenommenen Container hinwegfahren, einen Container auf drei gestapelten Containern absetzen oder den obersten von vier gestapelten Containern aufnehmen.

Portalhubgeräte und auch die übrigen im Zusammenhang der vorliegenden Erfindung beschriebenen Transportfahrzeuge sind zudem über Räder frei auf einer Flurfläche und damit flurgebunden, jedoch nicht schienengebunden, verfahrbar. Dementsprechend sind die Transportfahrzeuge von Schienenfahrzeugen und insbesondere von Eisenbahnwagons zu unterscheiden. Die Räder der Transportfahrzeuge sind jeweils mit einer Bereifung versehen, die vorzugsweise eine mit Luft befüllte Gummibereifung im Sinne von Pneus ist. Außerdem umfassen die Transportfahrzeuge jeweils einen Fahrantrieb mit einem beispielsweise als Elektromotor oder Verbrennungsmotor ausgebildeten Motor und einem Getriebe, um hierüber die Räder anzutreiben.

Des Weiteren können entsprechende Transportfahrzeuge manuell geführt werden und dementsprechend insbesondere beim Beschleunigen, Bremsen und Lenken von üblicherweise mitfahrenden Fahrern aktiv gesteuert werden. Hierfür weisen manuell geführte Transportfahrzeuge eine entsprechende Fahrzeugsteuerung und üblicherweise auch eine Fahrerkabine auf, aus der zum manuellen Führen ein manuelles Eingreifen in die Fahrzeugsteuerung erfolgen kann. Alternativ können die Transportfahrzeuge auch automatisch geführt sein und dementsprechend insbesondere beim Beschleunigen, Bremsen und Lenken im Sinne so genannter Automated Guided Vehicles (AGV) automatisiert gesteuert werden. Hierfür weisen automatisch geführte Transportfahrzeuge eine geeignete Fahrzeugsteuerung auf, so dass aufgrund der hierüber erfolgenden automatischen Steuerung beziehungsweise Navigation kein aktives manuelles Eingreifen eines mitfahrenden Fahrers erforderlich oder möglich ist. In diesem Sinne kann ein automatisch geführtes Transportfahrzeug auch bemannt sein, wenn ein Fahrer passiv mitfährt, hierbei jedoch nicht im Sinne eines Fahrzeugführers aktiv in die Steuerung des Transportfahrzeugs eingreifen muss oder kann. Fahrerlose, aber von einem Fahrzeugführer manuell ferngesteuerte Transportfahrzeuge gelten nicht als automatisch geführte, sondern als manuell geführte Fahrzeuge.

Typische Einsatzgebiete von Transportfahrzeugen und insbesondere Portalhubgeräten im Sinne der vorliegenden Erfindung sind der Umschlag sowie der Transport von Containern, insbesondere von genormten ISO-Containern, innerhalb von als Terminal ausgebildeten Umschlaganlagen in See- oder Binnenhäfen oder in Umschlaganlagen für den kombinierten Verkehr zwischen Straße und Schiene. Diese Transportfahrzeuge sind als Schwerlastfahrzeuge ausgebildete Spezialfahrzeuge, die als interne Transportfahrzeuge nur innerbetrieblich innerhalb solcher Terminals betrieben werden und in der Regel nicht für den öffentlichen Verkehr zugelassen sind. Die internen Transportfahrzeuge sind daher strikt vom öffentlichen Verkehr getrennt zu betreiben.

Auch sind die vorliegend betroffenen Portalhubgeräte von Container-Stapelkranen und insbesondere von so genannten Rubber Tire Gantry Cranes (RTG) zu unterscheiden, deren horizontaler Kranträger zwei oder mehr Containerreihen überspannt. Die Hubvorrichtung von derartigen Stapelkranen wird zum Aufnehmen oder Absetzen von Containern aus beziehungsweise in einer Containerreihe mittels einer Krankatze entlang des Kranträgers über die gewünschte Containerreihe verfahren und dann das Lastaufnahmemittel mittels der Hubvorrichtung abgesenkt beziehungsweise angehoben. Anders als bei den vorgenannten Portalhubgeräten ist die Hubvorrichtung bei entsprechenden Stapelkranen also bezüglich ihrer horizontalen Position nicht ortsfest zwischen den Portalstützen, sondern über die Krankatze in horizontaler Richtung und somit in horizontaler Richtung relativ zu den Portalstützen beweglich. Ein auch als Straddle Carrier bezeichnetes Portalhubgerät weist keine entsprechende Krankatze auf.

Umschlaganlagen für Container, insbesondere ISO-Container, sind beispielsweise aus der EP 2 637 954 B1 bekannt. In der Umschlaganlage sind ein Automatik-Bereich und ein Manuell-Bereich eingerichtet. In dem Automatik-Bereich dürfen ausschließlich automatisch geführte interne Transportfahrzeuge für Container betrieben werden und in dem Manuell-Bereich ausschließlich manuell geführte interne Transportfahrzeuge. Die Transportfahrzeuge transportieren im Automatik-Bereich und im Manuell-Bereich jeweils Container zwischen Containerbrücken und einem Containerlager.

Es sind auch Umschlaganlagen bekannt, in denen zwischen einem derartigen Automatik-Bereich und dem Manuell-Bereich eine Übergabezone mit einem Übergabebereich für Container eingerichtet ist, in den automatisch geführte und manuell geführte Portalhubgeräte abwechselnd ein- und ausfahren und Container in dem Übergabebereich abgeben, insbesondere abstellen, und aufnehmen. Unter einer Übergabe wird im Rahmen der vorliegenden Erfindung also nicht nur eine unmittelbare Übergabe und Übernahme eines Containers zwischen zwei zeitgleich im Übergabebereich befindlichen Transportfahrzeugen derart verstanden, dass das Entladen des einen Container abgebenden Transportfahrzeugs direkt und unmittelbar mit dem Beladen des den Container aufnehmenden beziehungsweise übernehmenden Transportfahrzeugs einhergehen muss. Vielmehr erlaubt eine Übergabe in diesem Sinne auch das Abstellen des Containers außerhalb eines Transportfahrzeugs, bevor der Container anschließend von einem anderen Transportfahrzeug aufgenommen und damit dieses Transportfahrzeug mit dem Container beladen wird. Ein derartiger Übergabebereich könnte daher auch als Be- und Entladebereich bezeichnet werden, der jeweils zeitlich getrennt sowohl von automatisch geführten als auch von manuell geführten Transportfahrzeugen und insbesondere Portalhubgeräten genutzt wird.

Damit ein zeitgleiches Einfahren eines manuell geführten und eines automatisch geführten Transportfahrzeuges in den Übergabebereich und deren Kollision verhindert wird, sind insbesondere für die manuell geführten Fahrzeuge physische Zufahrtsbeschränkungen und Barrieren wie beispielsweise in einem Zaun eingebrachte Schranken vorgesehen, die entsprechend geöffnet oder geschlossen werden können, um eine Berechtigung zur Einfahrt in den Übergabebereich zu gewähren oder zu verwehren.

Die DE 103 22 765 A1 betrifft einen automatisierten Speditionshof. In dem Speditionshof werden Lastkraftwagen ferngesteuert betrieben, die außerhalb des Speditionshofs manuell von mitfahrenden Fahrern betrieben werden.

Die DE 10 2012 009 297 A1 und DE 10 2004 035 856 A1 betreffen jeweils die Unterstützung von Fahrern, die Fahrzeuge manuell im öffentlichen Straßenverkehr betreiben. JP 2 975594 B1 konzentriert sich auf das Sicherheitsaspekt einer Kreuzung, wobei verschiedenen Fahrzeuge von zwei Typen (automatisch und manuell) fahren können.

Hiervon ausgehend liegt der Erfindung die Aufgabe zugrunde, ein verbessertes gattungsgemäßes Verfahren, ein verbessertes gattungsgemäßes Steuerungssystem und eine verbesserte gattungsgemäße Umschlaganlage bereitzustellen, die jeweils einen besonders sicheren Betrieb von Transportfahrzeugen in einer Übergabezone für Container ermöglichen.

Die Aufgabe wird durch ein Verfahren mit den Merkmalen von Anspruch 1, ein Steuerungssystem mit den Merkmalen von Anspruch 8 und eine Umschlaganlage mit den Merkmalen von Anspruch 12 gelöst. In den abhängigen Ansprüchen und der nachfolgenden Beschreibung sind vorteilhafte Ausgestaltungen der Erfindung angegeben.

Ein Verfahren zur Steuerung des Befahrens einer Übergabezone für Container von Transportfahrzeugen für Container, insbesondere Portalhubgeräten, wobei die Übergabezone einen Automatik-Bereich für automatisch geführte Transportfahrzeuge mit einem Manuell-Bereich für manuell geführte Transportfahrzeuge verbindet und die Transportfahrzeuge die Übergabezone befahren, um Container in der Übergabezone abzugeben oder aufzunehmen, wobei den Transportfahrzeugen zum Befahren der Übergabezone eine Berechtigung zur Einfahrt in die Übergabezone gewährt oder verwehrt wird, wird erfindungsgemäß dadurch verbessert, dass ohne gewährte Berechtigung zur Einfahrt eines manuell geführten Transportfahrzeugs, insbesondere Portalhubgeräts, in die Übergabezone automatisch ein Eingriff in eine Fahrzeugsteuerung dieses Transportfahrzeugs derart erfolgt, dass zumindest eine vollständige Einfahrt, vorzugsweise jedoch selbst eine teilweise Einfahrt, in die Übergabezone verhindert wird. Mit anderen Worten wird der Eingriff in die Fahrzeugsteuerung nur verhindert, wenn dem jeweiligen Transportfahrzeug eine Berechtigung zur Einfahrt gewährt wurde. Ansonsten, insbesondere bei verwehrter Berechtigung oder ohne angefragte Berechtigung, wird durch den Eingriff eine Einfahrt verhindert. Hierbei kann zumindest eine vollständige Einfahrt, vorzugsweise jedoch selbst eine teilweise Einfahrt, in die Übergabezone verhindert werden. Sofern das Transportfahrzeug ein Portalhubgerät ist, handelt es sich hierbei vorzugsweise um einen Straddle Carrier.

Während die Berechtigung zur Einfahrt in Übergabezonen konventionell mittels physischer Zufahrtsbeschränkungen wie Schranken gesteuert wird, können diese durch das erfindungsgemäße Verfahren entfallen. Dies ist vorteilhaft, da die Verwendung von physischen Zufahrtsbeschränkungen wie Zäunen, Barrieren, Schranken etc. mit enormen finanziellen Investitionen verbunden ist, insbesondere wenn die Übergabezonen sich über große Flächen innerhalb einer Umschlaganlage erstrecken. Durch die Erfindung wird ermöglicht, dass die Übergabezone barrierefrei ausgestaltet werden kann und somit diesbezüglich nur geringe finanzielle Investitionen beispielsweise für eine Ampelanlage verbunden sind und trotzdem eine Interaktion von manuellen und automatisierten Transportfahrzeugen wie Portalhubgeräten gewährleistet werden kann. Auch werden dadurch größere Übergabezonen mit zahlreichen Übergabebereichen möglich, ohne hierfür physische Zufahrtsbeschränkungen wie Barrieren installieren zu müssen. Bereits installierte Zufahrtsbeschränkungen können auch wieder entfernt werden, um zusätzliche Übergabebereiche definieren und entsprechend sicher betreiben zu können. Dies führt zu einer vergrößerten Umschlagleistung bei geringerem Infrastrukturaufwand. Hierdurch wird es deutlich vereinfacht, manuelle und automatisierte Transportleistungen, insbesondere des Horizontaltransports von Containern in Umschlaganlagen, zu kombinieren. Insbesondere eine sukzessive Automatisierung des Horizontaltransports in Umschlaganlagen wird dadurch erleichtert.

In vorteilhafter Weise ist vorgesehen, dass der Eingriff in die Fahrzeugsteuerung erfolgt, wenn das Transportfahrzeug sich der Übergabezone mit einem kritischen Bewegungsprofil nähert, ohne eine gewährte Berechtigung zur Einfahrt in einen Übergabebereich der Übergabezone erhalten zu haben. Dies gilt insbesondere, wenn eine Berechtigung zur Einfahrt verwehrt wurde oder seitens des Transportfahrzeugs keine Berechtigung angefragt wurde. Für kritische beziehungsweise unkritische Bewegungsprofile können Vorgaben definiert und hinterlegt werden und ein entsprechender Eingriff erfolgen, wenn ein kritisches Bewegungsprofil des Transportfahrzeugs erkannt wird und das Transportfahrzeug keine gewährte Berechtigung zur Einfahrt in die Übergabezone erhalten hat. Ein kritisches Bewegungsprofil kann dementsprechend beispielsweise vorliegen, wenn sich das Transportfahrzeug zu schnell und/oder mit zu geringem Abstand zur Übergabezone mit auf die Übergabezone gerichteter Fahrtrichtung bewegt.

Um die Einfahrt in die Übergabezone wirksam zu verhindern, ist vorgesehen, dass der dann erfolgende automatische Eingriff in die Fahrzeugsteuerung eine Vorgabe einer Geschwindigkeitsbegrenzung für das Transportfahrzeug umfasst. Dadurch kann das Transportfahrzeug gegebenenfalls bis zum Stillstand abgebremst werden.

Vorteilhaft kann vorgesehen sein, dass ein Übergabebereich der Übergabezone, die den Automatik-Bereich mit dem Manuell-Bereich verbindet, so definiert wird, dass er zumindest einen Teil einer ersten Fahrspur der Übergabezone umfasst und sich über zwei weitere benachbarte Fahrspuren zumindest anteilig, vorzugsweise jeweils hälftig, erstreckt, die jeweils längsseitig und einander gegenüber liegend an die erste Fahrspur angrenzen und den Automatik-Bereich mit dem Manuell-Bereich verbinden. Dies stellt eine besonders sichere Definition eines Übergabebereichs dar. Der Übergabebereich kann jedoch auch mit einer kleineren Mindestfläche definiert werden.

Die Sicherheit des Verfahrens wird weiter dadurch erhöht, dass eine Anfrage eines Transportfahrzeugs erforderlich ist, um eine Berechtigung zur Einfahrt in die Übergabezone und insbesondere einen Übergabebereich der Übergabezone zu erhalten. Auf diese Weise können Anfragen und hierzu gewährte Berechtigungen wie unten beschrieben verwaltet werden, um Kollisionen in der Übergabezone zuverlässig zu verhindern. Ohne entsprechende Anfrage wird keine Berechtigung zur Einfahrt gewährt, so dass wie oben beschrieben ein Eingriff in die Fahrzeugsteuerung erforderlich werden kann.

Zur Vermeidung von Kollisionen ist auch vorgesehen, dass die Berechtigung zur Einfahrt in einen Übergabebereich der Übergabezone gewährt wird, wenn der Übergabebereich sich in einem neutralen Bereitschaftszustand befindet, und die Berechtigung zur Einfahrt in den Übergabebereich verwehrt wird, wenn der Übergabebereich zumindest teilweise für ein anderes Transportfahrzeug geblockt ist. Um in einem neutralen Bereitschaftszustand zu sein, darf der angefragte gewünschte Übergabebereich, das heißt die zugehörigen vollständigen und/oder anteiligen Fahrspuren, nicht schon identisch oder teilweise für die Einfahrt eines anderes Transportfahrzeugs geblockt sein. Insbesondere ein anderes Portalhubgerät darf sich nicht in dem Übergabebereich befinden.

Auch wenn sich die gesamte Übergabezone in neutralem Bereitschaftszustand befindet, jedoch der Fahrer eines manuell geführten Transportfahrzeug mit kritischem Bewegungsprofil versucht in die Übergabezone einzufahren, ohne dass eine Anfrage für eine Berechtigung zur Einfahrt in einen Übergabebereich der Übergabezone ausgelöst wurde oder eine Anfrage zwar ausgelöst, jedoch keine Berechtigung zur Einfahrt gewährt wurde, erfolgt der Eingriff in die Fahrzeugsteuerung.

In vorteilhafter Weise kann zudem vorgesehen sein, dass zwei Transportfahrzeugen, von denen ein Transportfahrzeug manuell geführt und ein Transportfahrzeug automatisch geführt ist, nacheinander jeweils eine Berechtigung zur Einfahrt in einen Übergabebereich der Übergabezone gewährt wird, um einen Container für einen Transport von dem Automatik-Bereich in den Manuell-Bereich oder umgekehrt abzugeben beziehungsweise aufzunehmen. Wie unten näher beschrieben, muss dem automatisch geführten Transportfahrzeug ebenfalls eine Berechtigung zur Einfahrt gewährt werden, da ansonsten in gleicher Weise ein automatischer Eingriff in dessen Fahrzeugsteuerung erfolgt, um eine vollständige oder teilweise Einfahrt in die Übergabezone zu verhindern, wenn sich das Transportfahrzeug ohne gewährte Berechtigung der Übergabezone nähert.

Ein Steuerungssystem zur Steuerung des Befahrens einer Übergabezone für Container von Transportfahrzeugen für Container, insbesondere Portalhubgeräten, wobei die Übergabezone einen Automatik-Bereich für automatisch geführte Transportfahrzeuge mit einem Manuell-Bereich für manuell geführte Transportfahrzeuge verbindet und die Transportfahrzeuge die Übergabezone befahren, um Container in der Übergabezone abzugeben oder aufzunehmen, und das Steuerungssystem ausgebildet ist, um den Transportfahrzeugen zum Befahren der Übergabezone eine Berechtigung zur Einfahrt in die Übergabezone zu gewähren oder zu verwehren, wird erfindungsgemäß dadurch verbessert, dass das Steuerungssystem ausgebildet ist, um das oben beschriebene erfindungsgemäße Verfahren durchzuführen und somit ohne gewährte Berechtigung zur Einfahrt eines manuell geführten Transportfahrzeugs, insbesondere Portalhubgeräts, in die Übergabezone automatisch einen Eingriff in eine Fahrzeugsteuerung des Transportfahrzeugs derart vorzunehmen, dass eine Einfahrt in die Übergabezone verhindert wird. Mittels des Steuerungssystems kann also ebenfalls zumindest eine vollständige Einfahrt, vorzugsweise jedoch auch eine teilweise Einfahrt, in die Übergabezone verhindert werden, wenn keine entsprechende Berechtigung zur Einfahrt vorliegt. Hierdurch ergeben sich die obigen Vorteile in entsprechender Weise.

In konstruktiv einfacher Weise ist vorgesehen, dass das Steuerungssystem eine Sicherheitssteuerung und eine Fahrzeugsteuerung des Transportfahrzeugs, insbesondere automatisch oder manuell geführten Portalhubgeräts, umfasst und die Sicherheitssteuerung des Transportfahrzeugs mit der Fahrzeugsteuerung zusammenwirkt, um ohne gewährte Berechtigung zur Einfahrt den Eingriff in die Fahrzeugsteuerung vorzunehmen. Vorzugsweise weist hierbei jedes in das Steuerungssystem eingebundene Transportfahrzeug eine solche Sicherheitssteuerung auf, die über Kommunikationsverbindungen in das Steuerungssystem eingebunden sind.

Des Weiteren ist vorteilhaft vorgesehen, dass das Steuerungssystem eine zentrale Sicherheitssteuerung aufweist, um auf die Anfrage des Transportfahrzeugs eine Berechtigung zur Einfahrt in die Übergabezone und insbesondere einen Übergabebereich der Übergabezone zu gewähren oder zu verwehren. Die zentrale Sicherheitssteuerung wirkt hierbei entsprechend mit der jeweiligen fahrzeugseitigen Sicherheitssteuerung zusammen.

Beide Sicherheitssteuerungen sind vorzugsweise als ausfallsichere speicherprogrammierbare Steuerungen ausgebildet. Entsprechende Steuerungen werden auch als SPS (Speicherprogrammierbare Steuerung) oder PLC (Programmable Logic Controller) beziehungsweise Failsafe PLC oder F-PLC bezeichnet.

In vorteilhafter Weise ist außerdem vorgesehen, dass das Steuerungssystem ein Positionserfassungssystem für jedes in das Steuerungssystem einzubindende Transportfahrzeug aufweist, um zu erkennen, wenn sich das entsprechende Transportfahrzeug der Übergabezone und/oder einem in der Übergabezone definierten Übergabebereich mit einem kritischem Bewegungsprofil nähert. Mittels des am jeweiligen Transportfahrzeug beziehungsweise Portalhubgerät angebrachten Positionserfassungssystems kann also beispielsweise ein Ist-Bewegungsprofil ermittelt und zur Erkennung eines kritischen Bewegungsprofils zur Verfügung gestellt werden. Das Positionserfassungssystem kann beispielsweise auf der Transponder-, GPS- oder Funkortungstechnologie basieren und die hiermit ermittelten Positionsdaten beispielsweise mittels des odometrischen Verfahrens validiert werden.

Eine Umschlaganlage für Container mit einer Übergabezone für Container, die einen Automatik-Bereich für automatisch geführte Transportfahrzeuge mit einem Manuell-Bereich für manuell geführte Transportfahrzeuge verbindet, wird erfindungsgemäß dadurch verbessert, dass die Umschlaganlage ein entsprechendes Steuerungssystem aufweist. Hierbei kann das Steuerungssystem in ein Leitsystem der Umschlaganlage wie unten beschrieben eingebunden werden, um den Horizontaltransport insbesondere in der Übergabezone sicher und kollisionsfrei zu koordinieren.
In vorteilhafter Weise kann hierbei vorgesehen sein, dass in der Übergabezone zumindest ein Übergabebereich definierbar ist, der an seinen Grenzen zum Automatik-Bereich und zum Manuell-Bereich barrierefrei im obigen Sinne ausgebildet ist. In einer solchen Umschlaganlage sind also insbesondere keine als physische Zufahrtsbeschränkungen dienenden Barrieren wie Zäune oder Schranken zu installieren. Auch können diese sukzessiv entfernt werden, um zusätzliche Übergabebereiche definieren und dadurch die Umschlagleistung einer Umschlaganlage erhöhen zu können.

Ein Ausführungsbeispiel der Erfindung wird anhand der nachfolgenden Beschreibung näher erläutert. Es zeigen:
Figur 1 eine schematische Draufsicht auf einen Teil einer Umschlaganlage für Container,
Figur 2 einen vergrößerten Ausschnitt einer Übergabezone der Umschlaganlage aus Figur 1 mit zwei geblockten Übergabebereichen für Portalhubgeräte und
Figur 3 eine funktionelle Darstellung eines in das erfindungsgemäße Steuerungssystem eingebundenen Portalhubgeräts,

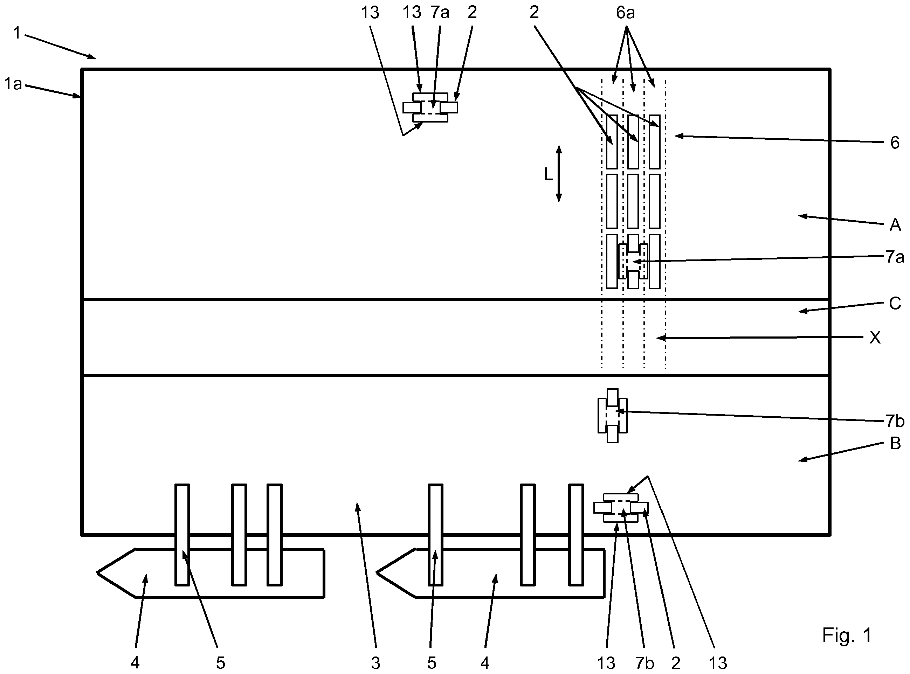

Die Figur 1 zeigt eine schematische Draufsicht auf einen Teil einer Umschlaganlage 1 für Container 2 in einem Hafen. Hierbei können an einem Kai 3 des Hafens Schiffe 4 anlegen, um Container 2 anzuliefern oder abzuholen. Für das Beladen beziehungsweise Löschen der Schiffe 4 sind an dem Kai 3 Containerbrücken 5 vorgesehen, die auch als Ship-to-Shore Cranes bezeichnet werden und deren Ausleger sich einerseits über die Schiffe 4 und andererseits über dem Kai 3 erstrecken. Alternativ kann das Beladen beziehungsweise Löschen der Schiffe 4 auch über so genannte Hafenkrane erfolgen, deren Ausleger hierbei um eine vertikale Achse über das entsprechende Schiff 4 verschwenkt wird. Sowohl die Containerbrücken 5 als auch die Hafenkrane stellen so genannte Umschlaggeräte dar.

Die Container 2 können im beladenen Zustand bis zu 40 t wiegen und normierte oder zumindest standardisierte Längen von zum Beispiel 10, 20, 40, 45, 53 oder 60 Fuß aufweisen. Hierbei können die Container 2 als ISO-Container ausgebildet sein und normierte Eckbeschläge aufweisen. Die beiden letztgenannten Längen werden bisher als nicht ISO genormte Container ausschließlich in Nordamerika eingesetzt. In diesem Zusammenhang werden unter ISO-Containern genormte Großraumbeziehungsweise Seefrachtcontainer verstanden, die im internationalen Warenverkehr zum Einsatz kommen. Die Container 2 können aber auch andere normierte oder zumindest standardisierte Ladungsträger wie beispielsweise Wechselaufbauten, insbesondere Wechselbehälter oder Wechselbrücken, sein.

Die Umschlaganlage 1 ist als Terminal beziehungsweise Hafenterminal ausgebildet und dementsprechend von einer beispielsweise als Zaun oder Mauer ausgebildeten und sich bis zum Rand des Kais 3 erstreckenden Begrenzung 1a umgeben. Dadurch ist die Umschlaganlage 1 von der äußeren Umgebung und vom öffentlichen Verkehr außerhalb des Terminals getrennt. Als wesentlichen Bestandteil umfasst die Umschlaganlage 1 innerhalb der Begrenzung 1a ein Lager 6, in dem Container 2 zur Zwischenlagerung abgestellt und insbesondere in auch als Stack bezeichneten Stapeln gestapelt werden können. Dies geschieht nachdem sie von den Schiffen 4 abgeladen wurden und bevor sie für den weiteren Transport außerhalb der Umschlaganlage 1 auf ein externes Transportfahrzeug oder Schienenfahrzeug geladen oder nachdem sie hiervon angeliefert wurden und bevor sie auf die Schiffe 4 geladen werden. Das Lager 6 weist reihenförmige Lagerbereiche 6a auf, die sich entlang beziehungsweise parallel zu einer Längsrichtung L erstrecken und von denen mehrere parallel nebeneinander und durch schmale Gassen zueinander beabstandet angeordnet sind. In den Lagerbereichen 6a können die Container 2 gestapelt werden, wobei die Container 2 mit ihrer Längserstreckung parallel zur Längsrichtung L ausgerichtet werden. Dadurch ergibt sich eine in Figur 1 erkennbare reihenförmige und/oder rasterförmige Anordnung der Stapel innerhalb des Lagers 6.

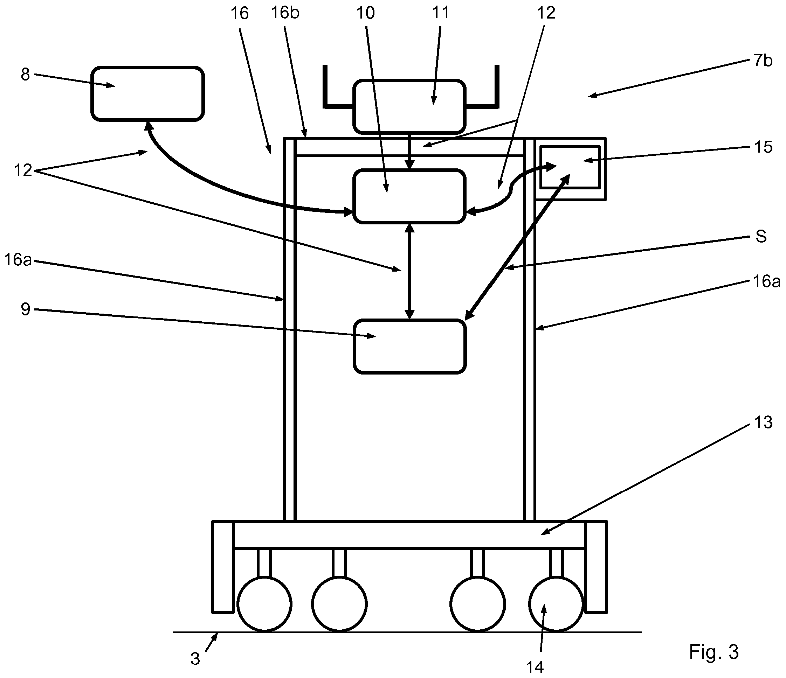

Um Container 2 zwischen den am Kai 3 angeordneten Umschlaggeräten und dem Lager 6 in einem so genannten Horizontaltransport zu transportieren und anschließend im Lager 6 zu stapeln beziehungsweise entstapeln, werden innerhalb der Umschlaganlage 1 als interne Transportfahrzeuge für die Container 2 im Sinne der obigen Definition automatisch geführte Portalhubgeräte 7a und manuell geführte Portalhubgeräte 7b (siehe auch Figur 3) eingesetzt. Die auch als Straddle Carrier bezeichneten Portalhubgeräte 7a, 7b werden also sowohl zum Horizontaltransport außerhalb des Lagers 6 als auch zum Bewirtschaften des Lagers 6, das heißt zum Ein- und Auslagern durch Stapeln und Entstapeln der Container 2 in dem Lager 6, eingesetzt.

Zu diesem Zweck weisen die Portalhubgeräte 7a, 7b jeweils einen im eingangs beschriebenen Sinne ausgebildeten Aufbau mit zwei nebeneinander angeordneten und quer zu ihrer Längserstreckung mindestens mit der Breite eines ISO-Containers voneinander beabstandeten Fahrwerkträgern 13 auf. Die Fahrwerkträger 13 sind mit ihrer jeweiligen Längserstreckung parallel zueinander ausgerichtet. In der Seitenansicht von Figur 3 ist daher nur einer der beiden Fahrwerkträger 13 erkennbar und der andere hiervon verdeckt. Der Abstand zwischen den beiden Fahrwerkträgern 13 ist jedoch geringer als die Gesamtbreite von zwei mit ihren Längsseiten nebeneinander stehenden ISO-Containern, so dass die Portalhubgeräte 7a, 7b anders als ein Container-Stapelkran nicht über zwei entsprechend nebeneinander stehende ISO-Container hinweg fahren können. An jedem Fahrwerkträger 13 sind mehrere lenkbare Räder 14 im Sinne der obigen Definition angebracht (siehe Figur 3). Die Portalhubgeräte 7a, 7b sind dadurch frei und nicht-schienengebunden verfahrbar. Die Fahrwerkträger 13 weisen zudem elektrische Fahrantriebe und elektrische Lenkmotoren für die Räder 14 auf, die von einer Antriebseinheit des Portalhubgeräts 7a, 7b gespeist werden. Je nach verwendeter Antriebstechnologie (dieselelektrisch, dieselhydraulisch oder vollelektrisch), umfasst die Antriebseinheit Komponenten wie beispielsweise einen Dieselmotor und Generator, Batterien und/oder Hydraulikaggregate. Durch die vorhandene Einzelradlenkung können über eine Fahrzeugsteuerung 9 verschiedene Lenkprogramme wie beispielsweise eine optimierte Standardkurvenfahrt, Kreisfahrt, eine Drehung um die eigene Vertikalachse oder ein Krebsgang realisiert werden.

Auf den Fahrwerkträgern 13 stützt sich ein wie eingangs beschrieben u-förmiger Portalrahmen 16 ab, dessen Oberrahmen 16b von vier Portalstützen 16a getragen wird, von denen ebenfalls nur die vorderen beiden erkennbar sind. Zwischen den beiden Fahrwerkträgern 13 und unterhalb des Oberrahmens 16b ist ein Lastaufnahmemittel in Form eines Spreaders für Container 2 mittels einer Hubvorrichtung vertikal heb- und senkbar. Mit dem Spreader können Container 2 aufgenommen, angehoben, transportiert, abgesenkt und abgestellt werden sowie hierbei gestapelt oder entstapelt werden. Die Hubvorrichtung ist zudem in ihrer horizontalen Position zwischen den Portalstützen 16a ortsfest bezüglich der Portalstützen 16a angeordnet, so dass mangels einer Krankatze die Hubvorrichtung und das Lastaufnahmemittel allein durch geeignetes Manövrieren des Portalhubgeräts 7a, 7b über der gewünschten Stellfläche beziehungsweise dem gewünschten Container, insbesondere in einer gewünschten Containerreihe, positioniert werden müssen, um dort einen Container 2 aufzunehmen oder abzustellen.

Durch diesen Aufbau können die Portalhubgeräte 7a, 7b mit entsprechend angehobenem Spreaderrahmen in Längsrichtung L entlang der Lagerbereiche 6a und über die darin jeweils gebildeten Stapel von Containern 2 beziehungsweise Containerreihen hinweg fahren, wobei einer der Fahrwerkträger 13 des Portalhubgeräts 7a, 7b rechts und der andere Fahrwerkträger 13 links vom jeweils überfahrenen Container 2 in der dort jeweils gebildeten Gasse angeordnet ist. Jeder Fahrwerkträger 13 befindet sich dabei in Richtung seiner Längserstreckung gesehen anteilig, vorzugsweise hälftig, in beiden aneinander angrenzenden Lagerbereichen 6a. Die Container 2 der Containerreihe, über die das Portalhubgerät 7a, 7b dabei vorzugsweise mittig hinweg fährt, sind dann zwischen den Fahrwerkträgern 13 und den entsprechenden Portalstützen 16a angeordnet. Für derartige Fahrten durch das Lager 6 erhalten die internen Transportfahrzeuge und damit auch die Portalhubgeräte 7a, 7b von einem Leitsystem der Umschlaganlage 1 geplante Transportaufträge und/oder Fahrtrouten.

Die zum Abarbeiten der Transportaufträge abzufahren Fahrtrouten werden von den automatisch geführten Portalhubgeräten 7a automatisch ausgeführt und mittels des Leitsystems koordiniert. Hierbei wirkt die Fahrzeugsteuerung 9 der automatisch navigierten Portalhubgeräte 7a so mit dem Leitsystem zusammen, dass eine steuerungstechnische Umsetzung der Fahrtrouten in entsprechende Fahrmanöver automatisch erfolgt. Dies umfasst auch die für die Lenkprogramme beziehungsweise Lenkvorgänge, Geschwindigkeiten und Beschleunigungen sowie Aktionen des Spreaders erforderliche Ansteuerung der entsprechenden Antriebe, insbesondere Fahrantriebe, Lenkmotoren und Hubantriebe der Hubvorrichtung für den Spreader, sowie Bremsen.

Bei manuell geführten Portalhubgeräten 7b ist hierfür ein manueller Eingriff eines Fahrers in die Fahrzeugsteuerung 9 erforderlich. Dies erfolgt üblicher Weise in einer Fahrerkabine 15, in der entsprechende Steuerungsmittel für einen manuellen Eingriff in die Fahrzeugsteuerung 9 vorgesehen sind und über eine drahtlose oder drahtgebundene Steuerleitung S Steuersignale an die Fahrzeugsteuerung 9 senden beziehungsweise mit dieser austauschen. Entsprechende Steuerungsmittel für einen manuellen Eingriff in die Fahrzeugsteuerung 9 sowie die Fahrerkabine 15 können bei der automatisch geführten Variante entfallen.

Die Umschlaganlage 1 umfasst innerhalb der Begrenzung 1a einen Automatik-Bereich A und einen Manuell-Bereich B. In dem Automatik-Bereich A dürfen zum Horizontaltransport nur automatisch geführte interne Transportfahrzeuge wie die Portalhubgeräte 7a betrieben werden. In dem Manuell-Bereich B dürfen zum Horizontaltransport nur manuell geführte interne Transportfahrzeuge wie die Portalhubgeräte 7b betrieben werden.

Das Lager 6 ist im vorliegenden Ausführungsbeispiel vollständig in dem Automatik-Bereich A angeordnet und wird somit durch die automatisch geführten Portalhubgeräte 7a automatisiert bewirtschaftet. Die Umschlaggeräte am Kai 3 sind hingegen im Manuell-Bereich B angeordnet, so dass für einen Transport von Containern 2 zwischen dem Lager 6 und den Umschlaggeräten am Kai 3 eine Übergabe zwischen den automatisch geführten Portalhubgeräten 7a und den manuell geführten Portalhubgeräten 7b erfolgen muss.

Alternativ oder zusätzlich ist auch denkbar, dass einerseits zumindest ein Teil des Lagers 6 im Manuell-Bereich B angeordnet ist und andererseits sich der Automatik-Bereich A bis zum Kai 3 erstreckt, so dass auch automatisch geführte Transportfahrzeuge Container 2 von den dortigen Umschlaggeräten abholen oder dort anliefern. Die Umschlaggeräte können auch manuell betrieben sein, da sie nicht zum Horizontaltransport eingesetzt werden. In diesem Fall muss für einen Transport von Containern 2 zwischen den Umschlaggeräten im Automatik-Bereich A und dem im Manuell-Bereich B angeordneten Teil des Lagers 6 ebenfalls eine Übergabe zwischen den automatisch geführten Portalhubgeräten 7a und den manuell geführten Portalhubgeräten 7b erfolgen.

Um derartige Übergaben von Containern 2 zu ermöglichen, ist zwischen dem Automatik-Bereich A und dem Manuell-Bereich B eine Übergabezone C eingerichtet, in dem vorzugsweise mehrere Übergabebereiche X, X1, X2 für Container 2 definiert werden können, die parallel, das heißt zeitgleich, jeweils von einem Portalhubgerät 7a oder 7b befahren werden können.

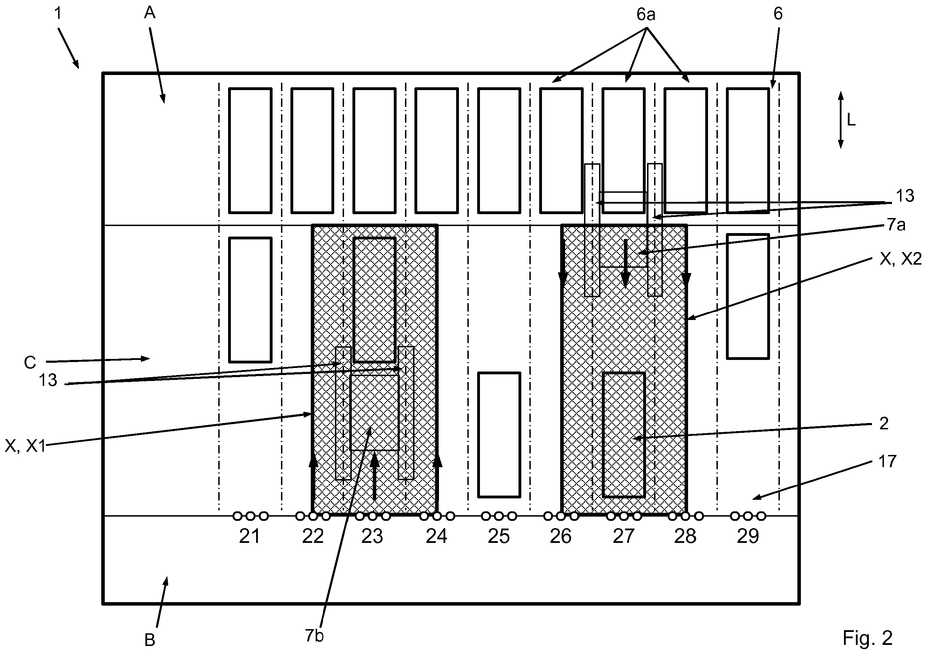

Die Figur 2 zeigt einen vergrößerten Ausschnitt der Übergabezone C der Umschlaganlage 1 aus Figur 1 mit zwei Übergabebereichen X1 und X2 für Container 2, von denen der Übergabebereich X1 für ein manuell geführtes Portalhubgerät 7b definiert und geblockt und der Übergabebereich X2 für ein automatisch geführtes Portalhubgerät 7a definiert und geblockt ist. Die Übergabezone C ist hierbei in mehrere benachbarte Fahrspuren 21 bis 29 aufgeteilt, die sich zwischen dem Automatik-Bereich A und dem Manuell-Bereich B erstrecken und jeweils fluchtend mit einem der Lagerbereiche 6a im Automatik-Bereich A angeordnet sind. Der Übergabebereich X1 umfasst vorliegend mittig die Fahrspur 23 und unmittelbar an deren einander gegenüberliegenden Längsseiten angrenzend jeweils anteilig, insbesondere hälftig, die Fahrspuren 22 beziehungsweise 24. Der von dem Übergabebereich X1 beabstandete Übergabebereich X2 umfasst mittig die Fahrspur 27 und unmittelbar an deren einander gegenüberliegenden Längsseiten angrenzend jeweils anteilig, insbesondere hälftig, die Fahrspuren 26 beziehungsweise 28. Die Fahrspuren 21 bis 29 sind zumindest im Bereich des Manuell-Bereichs B zur besseren Orientierung für die Fahrer der manuell geführten Portalhubgeräte 7b mit Bodenmarkierungen gekennzeichnet und entsprechend mit den genannten Zahlen nummeriert. Auch die gestrichelt dargestellten Längsseiten der Fahrspuren 21 bis 29 und Lagerbereiche 6a können als Bodenmarkierungen auf der Flurfläche der Umschlaganlage 1 aufgebracht sein.

Die Übergabezone C und die darin definierbaren Übergabebereiche X, X1, X2 haben eine Schnittstellenfunktion zwischen dem Automatik-Bereich A und dem Manuell-Bereich B. Hierbei wird in Bezug auf den Verkehr der beiden angrenzenden Bereiche A, B einerseits eine undurchlässige Trennung gewährleistet, andererseits jedoch in Bezug auf einen Stückgutstrom von Containern 2 eine durchlässige Verbindung ermöglicht, die die erforderliche Übergabe von Containern 2 erlaubt. Um den Stückgutstrom von Containern 2 zwischen dem Automatik-Bereich A und dem Manuell-Bereich B zu ermöglichen, können die beispielsweise als Portalhubgeräte 7a, 7b ausgebildeten internen Transportfahrzeuge für eine Übergabe im oben definierten Sinne jeweils nur abwechselnd aus einem der beiden Bereiche A, B in die Übergabezone C beziehungsweise einen dortigen Übergabebereich X, X1, X2 einfahren und dort Container 2 zur Übergabe abgeben, insbesondere abstellen, beziehungsweise aufnehmen. Anschließend muss der Übergabebereich X, X1, X2 von dem jeweiligen Portalhubgerät 7a, 7b wieder in Richtung seines Herkunftsbereichs A oder B verlassen werden. Dementsprechend dürfen manuell geführte Transportfahrzeuge von der Übergabezone C beziehungsweise den dort definierten Übergabebereichen X, X1, X2 nicht in den Automatik-Bereich A hineinfahren und automatisch geführte Transportfahrzeuge dürfen von dort nicht in den Manuell-Bereich B hineinfahren. Dies gilt für den regulären Umschlag- und Transportbetrieb und insbesondere das hierbei erfolgende Abgeben beziehungsweise Abstellen und Aufnehmen von Containern 2. Hiervon ausgenommen sind etwaige Überführungen von Transportfahrzeugen zwischen den Bereichen A, B zur Wartung oder Reparatur, die nicht als regulärer Umschlag- und Transportbetrieb gelten. In diesem Zusammenhang dürfen sich auch Personen ausnahmsweise im Automatik-Bereich A aufhalten. Dies ist ansonsten höchstens als passiver Fahrer eines automatisch geführten Transportfahrzeugs möglich. Die Übergabezone C mit den dortigen Übergabebereichen X, X1, X2 bildet also den einzigen Bereich innerhalb der Begrenzung 1a, in dem im Zusammenhang des regulären Umschlag- und Transportbetriebs sowohl automatisch geführte als auch manuell geführte interne Transportfahrzeuge verkehren dürfen.

Damit die Übergabezone C für eine Übergabe, das heißt zum Abgeben, insbesondere Abstellen, und Aufnehmen eines Containers 2 kollisionsfrei von den automatisch geführten und den manuell geführten Portalhubgeräten 7a, 7b befahren werden kann, wird wie nachfolgend beschrieben ein erfindungsgemäßes Verfahren zur Steuerung des Befahrens der Übergabezone C mittels eines zur Durchführung dieses Verfahrens geeigneten erfindungsgemäßen Steuerungssystems (siehe Figur 3) zur Steuerung des Befahrens einer entsprechenden Übergabezone C durchgeführt. Zunächst wird dies beispielhaft im Zusammenhang des Befahrens des Übergabebereichs X1 von einem manuell geführten Portalhubgerät 7b und anschließend im Zusammenhang des Befahrens des Übergabebereichs X2 von einem automatisch geführten Portalhubgerät 7b erläutert.

Das manuell geführte Portalhubgerät 7b erhält einen Transportauftrag von dem Leitsystem der Umschlaganlage 1, der ein Befahren der Fahrspur 23 der Übergabezone C im Sinne einer innerhalb der Fahrspur 23 stattfindenden Fahrt erfordert, um dort beispielsweise einen Container 2 aufzunehmen und zu einer Containerbrücke 5 im Manuell-Bereich B zu transportieren. Die nachstehenden Ausführungen gelten analog, wenn das Portalhubgerät 7b die Fahrspur 23 befahren soll, um dort einen Container 2 abzustellen, der anschließend von einem automatisch geführten Portalhubgerät 7a aufgenommen und in das Lager 6, insbesondere den sich in Längsrichtung L an die Fahrspur 23 anschließenden Lagerbereich 6a, im Automatik-Bereich A eingelagert werden soll. Hierfür wird das Portalhubgerät 7b jeweils von seinem Fahrer durch den Manuell-Bereich B in Richtung der Fahrspur 23 manövriert.

Das Befahren der Fahrspur 23 innerhalb der Übergabezone C ist jedoch nur möglich, wenn dem Portalhubgerät 7b eine Berechtigung zur Einfahrt in den zur Fahrspur 23 gehörigen und die Fahrspur 23 beinhaltenden Übergabebereich X1 gewährt wird. Der Übergabebereich X1 ergibt sich dadurch, dass die Fahrspur 23 gemäß des Transportauftrags befahren werden soll und die rechts und links angrenzenden benachbarten Fahrspuren 22 und 24 zumindest anteilig, vorzugsweise jeweils hälftig, zusätzlich zu der Fahrspur 23 als Teil des Übergabebereichs X1 definiert werden. Auf diese Weise sind sämtliche Übergabebereiche X, X1, X2 variabel innerhalb der Übergabezone C definierbar, je nachdem welche der Fahrspuren 21 bis 29 für eine dortige Abgabe oder Aufnahme eines Containers 2 befahren werden soll. Durch die zumindest teilweise beziehungsweise anteilige Einbeziehung der benachbarten Fahrspuren 22 und 24 können Kollisionen mit etwaigen anderen in die Übergabezone C, insbesondere mittig auf der Fahrspur 21 oder 25, ein- oder ausfahrenden Portalhubgeräten 7a, 7b besonders zuverlässig vermieden werden. Die Fahrspur 23 ist so bemessen, dass sich zumindest ein Portalhubgerät 7a, 7b einschließlich eines aufgenommenen Containers 2 beim Befahren der Fahrspur 23 unter Berücksichtigung üblicher Toleranzbereiche mittig auf der Fahrspur 23 befinden kann, wobei die Längserstreckungen der Fahrwerkträger 13 und der Fahrspur 23 parallel zueinander ausgerichtet sind. In der Draufsicht von Figur 2 gesehen ragen dabei die Fahrwerkträger 13 des exemplarisch dargestellten Portalhubgeräts 7b anteilig, vorzugsweise hälftig, in die jeweils links beziehungsweise rechts benachbarte Fahrspur 22 beziehungsweise 24 hinein. Dementsprechend können in der Draufsicht von Figur 2 gesehen die gestrichelt dargestellten Begrenzungen der Fahrspur 23 auch mit der Mitte des jeweiligen Fahrwerkträgers 13 zusammenfallen. In diesem Fall sind die Fahrwerkträger 13 dann auch entlang ihrer Längserstreckung gesehen innerhalb, vorzugsweise mittig, bezüglich der jeweiligen Gasse ausgerichtet, die an den der Fahrspur 23 zugeordneten Lagerbereich 6a angrenzen. Somit können diese Gassen beim Überfahren dieses Lagerbereichs 6a von den Fahrwerkträgern 13 kollisionsfrei durchfahren werden. Die übrigen Fahrspuren der Übergabezone C sind in gleicher Weise bemessen.

Als Mindestfläche umfasst ein Übergabebereich X, X1, X2 die vertikale Projektionsfläche eines Portalhubgeräts 7a beziehungsweise 7b mit aufgenommenem Container 2. Die darüber hinaus als Teil des Übergabebereichs X, X1, X2 definierte Fläche und damit auch die vorliegend zumindest anteilig einbezogenen benachbarten Fahrspuren stellen somit eine Art Sicherheitsteil des Übergabebereichs X, X1, X2 dar.

Eine Berechtigung zur Einfahrt in den Übergabebereich X1 zum Befahren der Fahrspur 23 wird nur als Antwort auf eine entsprechende aktive Berechtigungsanfrage gewährt. Hierzu wird von einer Sicherheitssteuerung 10 des Portalhubgeräts 7b automatisch die Anfrage ausgelöst, ob eine Berechtigung zur Einfahrt in die Fahrspur 23 beziehungsweise einen der Fahrspur 23 zugeordneten Übergabebereich X, X1, X2 gewährt wird. Die Anfrage wird aufgrund des vom Leitsystem vorgegebenen Transportauftrags beziehungsweise der zugehörigen Fahrtroute ausgelöst, wenn diese in die Übergabezone C beziehungsweise eine der dortigen Fahrspur führen. Auch wird von der Sicherheitssteuerung 10 für die Anfrage der zugehörige Übergabebereich X1 automatisch gemäß den oben beschriebenen Kriterien ermittelt beziehungsweise definiert. Die Sicherheitssteuerung 10 und insbesondere auch das zugehörige Portalhubgerät 7b ist somit Teil des Steuerungssystems. Die Anfrage mit dem gewünschten Übergabebereich X1 wird dann über eine Kommunikationsverbindung 12 an eine zentrale und insbesondere ortsfeste Sicherheitssteuerung 8 des Steuerungssystems gesendet. Die Sicherheitssteuerung 8 weist hierfür eine Recheneinheit auf. Außerdem speichert und verwaltet die Sicherheitssteuerung 8 die bereits gewährten Berechtigungen und die Positionsdaten der zugehörigen aktuell definierten Übergabebereiche X, X1, X2 der Übergabezone C sowie die hierzu zugeordneten Portalhubgeräte 7a, 7b, für die der Übergabebereich X, X1, X2 aktuell geblockt ist. Zudem verwaltet die Sicherheitssteuerung 8 neue Anfragen und gewährt oder verwehrt eine Berechtigung zur Einfahrt in die Übergabezone C beziehungsweise darin definierte Übergabebereiche X, X1, X2. Hierzu überprüft die Sicherheitssteuerung 8 im vorliegenden Beispiel, ob der ermittelte Übergabebereich X1 frei oder bereits reserviert und somit geblockt ist. Durch die Einbeziehung der Fahrspur 23 in den Übergabebereich X1 wird nicht nur die Fahrspur 23, sondern auch jeweils der hälftige Bereich der Fahrspuren 22 und 24 geblockt. Der Übergabebereich X1 ist dementsprechend geblockt, falls zumindest einer der zugehörigen Anteile der Fahrspuren 22 bis 24 Teil eines anderen definierten Übergabebereichs X ist, für den bereits eine Berechtigung zur Einfahrt gewährt wurde, die noch aktuell ist. Die dann verwehrte Berechtigung zur Einfahrt wird als Antwort auf die Berechtigungsanfrage an die Sicherheitssteuerung 10 des Portalhubgeräts 7b gesendet und kann dem Fahrer durch eine Anzeige in der Fahrerkabine 15 oder auch von einer Ampelanlage 17 signalisiert werden. Falls einem Fahrer eine Berechtigung durch entsprechende Signalisierung verwehrt wird, ist eine erneute Anfrage zu einem späteren Zeitpunkt erforderlich. Dies geschieht automatisch und wiederkehrend durch die Sicherheitssteuerung 10, solange bis die entsprechende Berechtigung gewährt wird.

Falls der Fahrer trotz der verwehrten Berechtigung und somit ohne gewährte Berechtigung versucht, in einen reservierten beziehungsweise geblockten Übergabebereich X, X1, X2, beispielsweise die Fahrspur 23, hinein zu fahren, erfolgt mittels der Sicherheitssteuerung 10 ein automatischer Eingriff in die Fahrzeugsteuerung 9, derart, dass zumindest eine vollständige Einfahrt und damit auch ein vollständiges Befahren der Fahrspur 23 sowie eine Einfahrt in den Automatik-Bereich A verhindert wird. Auch eine teilweise Einfahrt kann verhindert werden. In diesem Zusammenhang werden laufend Positionsdaten des Portalhubgeräts 7b mit den gespeicherten Positionsdaten der für andere Portalhubgeräte 7a, 7b definierten und damit geblockten Übergabebereiche X, X1, X2 abgeglichen. Hierzu weisen die Portalhubgeräte 7b zusätzlich zu der Sicherheitssteuerung 10 ein Positionserfassungssystem 11 auf, das wie nachfolgend beschrieben in das Steuerungssystem eingebunden ist.

Das Positionserfassungssystem 11 kann beispielsweise mittels Transponder-, GPS- oder Funkortungstechnologie kontinuierlich Positionsdaten einschließlich Orientierungen des Portalhubgeräts 7b innerhalb der Umschlaganlage 1 ermitteln. Über eine Kommunikationsverbindung 12 werden die Positionsdaten von dem Positionserfassungssystem 11 an die Sicherheitssteuerung 8 übermittelt. Die Übermittlung der Positionsdaten an die Sicherheitssteuerung 8 kann eine Übermittlung an die Sicherheitssteuerung 10 beinhalten, die ebenfalls über eine Kommunikationsverbindung 12 erfolgt. Die Sicherheitssteuerung 10 kann die von dem Positionserfassungssystem 11 ermittelten Positionsdaten beispielsweise mittels eines odometrischen Verfahrens validieren, wofür die Sicherheitssteuerung 10 über eine weitere Kommunikationsverbindung 12 entsprechende Daten von der Fahrzeugsteuerung 9 erhält und anschließend die validierten Positionsdaten über eine Kommunikationsverbindung 12 an die Sicherheitssteuerung 8 übermittelt. Außerdem können der Fahrzeugsteuerung 9 mittels der Sicherheitssteuerung 10 Geschwindigkeitsbegrenzungen vorgegeben werden. Der Fahrer kann das Portalhubgerät 7b dann nicht mehr über die jeweils vorgegebene Geschwindigkeitsbegrenzung hinaus beschleunigen und wird gegebenenfalls durch Aktivierung der Bremsen verlangsamt. Dadurch kann das Portalhubgerät 7b durch Absenken der Geschwindigkeitsbegrenzung umso mehr und insbesondere im Sinne eines Nothalts bis zum Stillstand verlangsamt werden, je näher es dem Übergabebereich X1 der Übergabezone C kommt, sofern dem Portalhubgerät 7b noch keine Berechtigung zur Einfahrt in den Übergabebereich X1 gewährt wurde, da dies als verwehrte Berechtigung gilt. Der automatische Eingriff in die Fahrzeugsteuerung 9 umfasst also die Vorgabe mindestens einer Geschwindigkeitsbegrenzung, die bis auf den Wert Null gesenkt werden kann. Bei der Vorgabe von Geschwindigkeitsbegrenzungen kann insbesondere der Abstand des Portalhubgeräts 7b vom Übergabebereich X, X1, X2 sowie dessen Fahrtrichtung und Orientierung im Sinne eines Bewegungsprofils dynamisch berücksichtigt werden, so dass bei einer nicht in Richtung der Übergabezone C beziehungsweise der dortigen Übergabebereiche X, X1, X2, sondern beispielsweise parallel hierzu, gerichteten Bewegung kein Eingriff erfolgen muss oder ein Eingriff mit unterschiedlichen Geschwindigkeitsvorgaben erfolgen kann. Ebenso kann ein Eingriff unterbleiben, wenn sich das Portalhubgerät 7b ohne gewährte Berechtigung der Übergabezone C zwar nähert, jedoch mit einer als unkritisch eingestuften, vorgegebenen Geschwindigkeit und/oder mit einem noch als unkritisch eingestuften vorgegebenen verbleibenden Abstand. Hierzu können in der Sicherheitssteuerung 8 und/oder 10 entsprechende Vorgaben, insbesondere Bereiche und/oder Grenzwerte, für kritische beziehungsweise unkritische Bewegungsprofile hinterlegt und kontinuierlich mit dem Ist-Bewegungsprofil beziehungsweise dessen entsprechenden Ist-Werten verglichen werden. Die Ist-Positionsdaten und Ist-Ausrichtungen beziehungsweise - Orientierungen können hierfür mittels des Positionserfassungssystems 11 erfasst werden. Dies ist auch für die Ist-Geschwindigkeiten möglich, sofern hierfür keine separate Sensorik zur Geschwindigkeitsmessung vorgesehen ist. Auf diese Weise kann dann situationsabhängig entschieden werden, ob sich ein Portalhubgerät 7b der Übergabezone C mit einem kritischen Ist-Bewegungsprofil nähert und daher ein Eingriff in die Fahrzeugsteuerung 9 erfolgen muss oder ob das erfasste Ist-Bewegungsprofil unkritisch ist und ein Eingriff unterbleiben kann.

Dadurch kann verhindert werden, dass das Portalhubgerät 7b in die Übergabezone C beziehungsweise den Übergabebereich X, X1, X2 einfährt, da bei entsprechend kritischem Ist-Bewegungsprofil bereits vor der Einfahrt in die Übergabezone C bis zum Stillstand abgebremst werden kann. Für eine Weiterfahrt nach einem solchen Nothalt kann vorgesehen sein, dass zunächst von der Sicherheitssteuerung 8 eine entsprechende Berechtigung gewährt werden muss. In diesem Zusammenhang kann die Sicherheitssteuerung 10 so in das Steuerungssystem eingebunden sein, dass die Bremsen ohne eine von der Sicherheitssteuerung 8 gewährte Berechtigung nicht wieder gelöst werden können und/oder auf eine Weiterfahrt gerichtete Steuersignale von der Fahrzeugsteuerung 9 ignoriert und nicht in entsprechende Fahrmanöver umgesetzt werden. Hiervon ausgenommen kann eine vom Fahrer durch entsprechenden Eingriff bewirkte Richtungsumkehr sein, um das Portalhubgerät 7b von der Übergabezone C weg zu bewegen.

Falls der Übergabebereich X1 zu der obigen Berechtigungsanfrage nicht bereits reserviert beziehungsweise geblockt ist, wird eine Berechtigung gewährt, über die Kommunikationsverbindung 12 an das Portalhubgerät 7b beziehungsweise dessen Sicherheitssteuerung 10 zurück gemeldet und entsprechend vom Steuerungssystem beziehungsweise dessen Sicherheitssteuerung 8 zentral gespeichert. Der Übergabebereich X1 und die zugehörigen hälftigen Fahrspuren 22 und 24 sind dann für andere Portalhubgeräte 7a, 7b geblockt, falls diese über ihre Sicherheitssteuerung 10 eine entsprechende spätere Berechtigungsanfrage für einen Übergabebereich X an die Sicherheitssteuerung 8 übermitteln, der sich mit dem bereits geblockten Übergabebereich X1 überschneidet oder diesem vollständig entspricht. Allerdings wäre es möglich, dass zwischen den bereits geblockten Übergabebereichen X1 und X2 noch ein dritter Übergabebereich X definiert und wird, der mittig die Fahrspur 25 und entsprechend anteilig die angrenzenden Fahrspuren 24 und 26 umfassen würde. Die Fahrspur 24 könnte dann mit ihren jeweiligen aneinander grenzenden Anteilen zeitgleich sowohl von dem Portalhubgerät 7b im Übergabebereich X1 und einem Portalhubgerät 7a, 7b im dritten Übergabebereich X genutzt werden. Entsprechendes gilt für die Fahrspur 26. Verallgemeinert bedeutet dies, dass zeitgleich jedem zweiten Lagerbereich 6a ein Übergabebereich X zugeordnet werden kann. Die Fahrspur, die dem jeweils dazwischen liegenden Lagerbereich 6a ohne Übergabebereich X zugeordnet ist, wird hierbei entsprechend anteilig von den in den längsseitig angrenzenden Übergabebereichen X fahrenden Portalhubgeräten 7a, 7b genutzt.

Die gewährte Berechtigung kann dem Fahrer ebenso wie eine verwehrte Berechtigung zur Einfahrt durch eine Anzeige in der Fahrerkabine 15 oder auch von einer Ampelanlage 17 signalisiert werden. Nachdem die Berechtigung zur Einfahrt gewährt wurde, kann der Fahrer die Fahrspur 23 und damit den Übergabebereich X1 befahren, den Container 2 abgeben oder aufnehmen und in den Manuell-Bereich B zurückkehren. Mittels des Positionserfassungssystems 11 des Portalhubgeräts 7b wird erkannt, sobald der Übergabebereich X1 verlassen wurde, und dies entsprechend an die Sicherheitssteuerung 10 übermittelt. Dadurch erkennt die jeweilige Sicherheitssteuerung 10 bei jedem Portalhubgerät 7b das Verlassen des entsprechenden Übergabebereichs X, X1, X2 und übermittelt dies der Sicherheitssteuerung 8 insbesondere in Form einer Freigabe des entsprechenden Übergabebereichs X, X1, X2, wodurch die zugehörigen Fahrspuren wieder für die Definition neuer Übergabebereiche X beziehungsweise entsprechende Anfragen freigegeben werden. Dadurch können sämtliche wieder freigegebenen Fahrspuren 21 bis 29 beziehungsweise Übergabebereiche X, X1, X2 der Übergabezone C von der Sicherheitssteuerung 8 wieder in einem neutralen Bereitschaftszustand im Sinne eines neutralen Ausgangszustands behandelt werden. In dem Bereitschaftszustand sind die Fahrspuren 21 bis 29 weder für ein automatisch geführtes Portalhubgerät 7a noch für ein manuell geführtes Portalhubgerät 7b als Teil eines Übergabebereichs X, X1, X2 geblockt, sondern für neu zu definierende Übergabebereiche X und diesbezügliche Berechtigungsanfragen frei beziehungsweise verfügbar. Eine neue Berechtigung zur Einfahrt kann dann in zeitlicher Reihenfolge der als erstes eintreffenden Anfrage gewährt werden. Hierbei wird dann der in der Sicherheitssteuerung 8 gespeicherte Zustand entsprechend geändert, so dass die zugehörigen Fahrspuren nicht mehr frei im Bereitschaftszustand sind, sondern als geblockt dem Übergabebereich X zugeordnet werden, für den einem Portalhubgerät 7a oder 7b die Berechtigung zur Einfahrt gewährt wurde.

Für das Befahren der Übergabezone C beziehungsweise des darin definierten Übergabebereichs X2 von einem automatisch geführten Portalhubgerät 7a gelten die vorherigen Ausführungen entsprechend. Die erforderliche Anfrage bezüglich einer Berechtigung zur Einfahrt in den Übergabebereich X2 wird hier ebenfalls automatisch von der Sicherheitssteuerung 10 des Portalhubgeräts 7a ausgelöst, da diesem vom Leitsystem ein Transportauftrag übermittelt wurde, der ein Befahren der Fahrspur 27 erfordert. Hieraus ergibt sich, dass die Fahrspuren 26 bis 28 in der Sicherheitssteuerung 8 freigegeben beziehungsweise sich im Bereitschaftszustand befinden müssen, um den Übergabebereich X2 zu definieren und hierzu dem automatisch geführten Portalhubgerät 7a eine Berechtigung zur Einfahrt zu gewähren. Solange dies nicht der Fall ist, wird von der Sicherheitssteuerung 10 eine Einfahrt verhindert, indem das Portalhubgerät 7a automatisch an einer geeigneten Stelle hält und wartet oder zumindest seine Fahrt verlangsamt. Das Verlassen des Übergabebereichs X2 wird ebenfalls mittels eines entsprechenden Positionserfassungssystems 11 ermittelt, über die Sicherheitsteuerung 10 an die Sicherheitssteuerung 8 übermittelt und dort hinterlegt, wodurch die Fahrspuren 26 bis 28 wieder freigegeben und im Bereitschaftszustand sind.

Die Sicherheitssteuerung 8 kann immer nur Berechtigungen zur Einfahrt gewähren, aber bereits gewährte Berechtigungen nicht wieder verwehren beziehungsweise entziehen. Die Freigabe wird immer von der Sicherheitssteuerung 10 des jeweiligen Portalhubgeräts 7a, 7b im Sinne einer Rückgabe veranlasst. Somit ist dies der fahrzeugseitigen Sicherheitssteuerung 10 auch bekannt und ein erneutes Einfahren in den entsprechenden Übergabebereich X kann verhindert werden, sofern keine neue Berechtigung von der Sicherheitssteuerung 8 gewährt wurde.

Sobald die Sicherheitssteuerung 10 durch den Abgleich der Positionsdaten erkennt, dass ein Portalhubgerät 7a, 7b sich der Übergabezone C mit einem kritischen Bewegungsprofil nähert, ohne dass dem Portalhubgerät 7a,7b eine Berechtigung zur Einfahrt in einen Übergabebereich X, X1, X2 gewährt wurde, kann mittels der Sicherheitssteuerung 10 ein entsprechender automatischer Eingriff in die jeweilige Fahrzeugsteuerung 9 erfolgen, um eine vollständige oder teilweise Einfahrt in die Übergabezone C zu verhindern und falls erforderlich zuvor ein Abbremsen bis zum Stillstand zu bewirken. Dies gilt nicht nur, wenn auf eine Anfrage eine Berechtigung verwehrt wurde, sondern auch, wenn keine Berechtigungsanfrage ausgelöst wurde oder wenn die fahrzeugseitige Sicherheitssteuerung 10 eine von der zentralen Sicherheitssteuerung 8 gesendete gewährte Berechtigung nicht empfangen hat.

Die Figur 3 zeigt eine funktionelle Darstellung des erfindungsgemäßen Steuerungssystems mit einem in das Steuerungssystem eingebundenen Portalhubgerät 7b. Das beispielhaft dargestellte manuell geführte Portalhubgerät 7b weist entsprechender Weise die für eine mitfahrende Bedienperson vorgesehene Fahrerkabine 15 auf. Alternativ kann das Portalhubgerät 7b jedoch wie oben beschrieben auch vollautomatisch als automatisch geführtes Portalhubgerät 7a im Sinne eines AGV oder halb-automatisch betreibbar ausgebildet sein. Hierbei kann die Fahrerkabine 15 entfallen. Schematisch dargestellt sind als weitere Bestandteile des Steuerungssystems außerdem die zentrale und insbesondere ortsfeste Sicherheitssteuerung 8 sowie die jeweils fahrzeugseitig angeordnete Fahrzeugsteuerung 9 und Sicherheitssteuerung 10 sowie das Positionserfassungssystem 11 und die entsprechenden Kommunikationsverbindungen 12. Die zentrale Sicherheitsteuerung 8 und die Sicherheitssteuerung 10 sind vorzugsweise als ausfallsichere speicherprogrammierbare Steuerungen ausgebildet. Entsprechende Steuerungen werden auch als SPS oder PLC beziehungsweise Failsafe PLC oder F-PLC bezeichnet. Die Sicherheitssteuerung 8 kann mit allen in der Umschlaganlage 1 betriebenen Transportfahrzeugen, insbesondere Portalhubgeräten 7a, 7b, und insbesondere deren jeweiliger Sicherheitssteuerung 10 über entsprechende Kommunikationsverbindungen 12 kommunizieren.

Das Steuerungssystem der Umschlaganlage 1 ist also ausgebildet und eingerichtet, um einerseits mittels seiner Sicherheitssteuerung 8 im Sinne des vorbeschriebenen erfindungsgemäßen Verfahrens den Portalhubgeräten 7a, 7b einerseits Berechtigungen zur Einfahrt in die Übergabezone C beziehungsweise darin definierte Übergabebereiche X, X1, X2 zu gewähren oder zu verwehren und andererseits mittels seiner Sicherheitssteuerung 10 einen automatischen Eingriff in die Fahrzeugsteuerung 9 der Portalhubgeräte 7a, 7b ohne gewährte Berechtigung zur Einfahrt in einen Übergabebereich X, X1, X2 der Übergabezone C derart vorzunehmen, dass zumindest eine vollständige, vorzugsweise jedoch selbst eine teilweise Einfahrt dieser Portalhubgeräte 7a, 7b in die Übergabezone C verhindert wird. Somit ermöglichen das erfindungsgemäße Verfahren und das entsprechende Steuerungssystem eine zuverlässige Steuerung und Überwachung der Einfahrten der gesamten Flotte von Portalhubgeräten 7a, 7b in die Übergabezone C und deren Fahrspuren, um diese kollisionsfrei zu koordinieren. Dies ermöglicht es, dass vorzugsweise die gesamte Übergabezone C und damit auch jeder darin definierte Übergabebereich X, X1, X2 insbesondere an den Grenzen zum Automatik-Bereich A und zum Manuell-Bereich B barrierefrei sein kann. Dort sind dementsprechend keine physischen Begrenzungen wie Zäune, Barken, Schranken zu installieren, um eine unberechtigte teilweise oder vollständige Einfahrt in die Übergabezone C und insbesondere Durchfahrt in den Automatik-Bereich A oder Manuell-Bereich B zu verhindern. Dies wird durch den etwaigen automatischen Eingriff in die Fahrzeugsteuerung 9 sichergestellt.

Auch eine unmittelbare Übergabe von Containern 2 zwischen einem Portalhubgerät 7a, 7b und einem Transportfahrzeug mit einer Ladefläche für Container 2 ohne zwischenzeitliches Abstellen der Container 2 außerhalb des Transportfahrzeugs ist in der Übergabezone C unter Einsatz der oben beschriebenen Erfindung möglich. Hierbei fährt das Portalhubgerät 7a, 7b dann über die Ladefläche des Transportfahrzeugs, dessen Abmessungen derart sind, dass das Transportfahrzeug mit Ladefläche zwischen die Fahrwerkträger 13 des Portalhubgerät 7a, 7b passt, um einen Container 2 aufzunehmen und hiervon abzuladen oder abzugeben und hierauf abzustellen. Bei einer derartigen Übergabe befinden sich das Portalhubgerät 7a, 7b und das Transportfahrzeug mit der Ladefläche zeitgleich in dem entsprechenden Übergabebereich X.

Entsprechende Transportfahrzeuge mit Ladefläche können ebenfalls als interne Transportfahrzeuge der Umschlageanlage 1 ausgebildet sein und analog zu den Portalhubgeräten 7a, 7b jeweils über ihre fahrzeugseitige Sicherheitssteuerung 10 mit der zentralen Sicherheitssteuerung 8 und der Fahrzeugsteuerung 9 wirkverbunden sein. Die Ladefläche ist dann üblicher Weise an ihren Seiten von mehreren Führungselementen begrenzt. Die Führungselemente weisen Führungsflächen mit einem schrägen Verlauf auf. Hierbei erstrecken sich die Führungsflächen von der Ladefläche nach oben und außen weg gerichtet und zu der Ladefläche nach unten und innen hin gerichtet. Vorzugsweise sind die Führungselemente paarweise an gegenüberliegenden Seiten, insbesondere Längsseiten und/oder Schmalseiten, der Ladefläche angeordnet. Die Führungsflächen eines Paars von Führungselementen bilden eine Art Trichter, deren schräger Verlauf sich zur Ladefläche hin verjüngt, um einen zu transportierenden Container 2 und im Fall von ISO-Containern insbesondere dessen Eckbeschläge beim Absetzen auf der Ladefläche führen und in Bezug auf die Ladefläche ausrichten zu können. Interne Transportfahrzeuge dieser Art können auch als Sattelzug ausgebildet sein, deren Zugmaschine dann für sich genommen oder mit einem die Ladefläche aufweisenden Anhänger auch als Terminal Truck bezeichnet wird. Terminal Trucks können manuell oder automatisch geführt sein. Bei einer weiteren Variante automatisch geführter interner Transportfahrzeuge mit Ladefläche und Führungselementen sind diese nicht Teil eines Anhängers, sondern als eine Art fahrende Plattform mit eigenem Fahrantrieb ausgebildet. Hierbei kann die Plattform und damit auch die Ladefläche über einen Hubantrieb heb- und senkbar sein, um aktiv Container 2 von einem Übergabegestell aufnehmen oder an dieses abgeben zu können.

Ebenso können Transportfahrzeuge mit einer Ladefläche für Container auch für den öffentlichen Verkehr zugelassene externe Transportfahrzeuge sein. Diese Transportfahrzeuge weisen jedoch keine Führungselemente auf, sondern zur Verriegelung der Container 2 auf der Ladefläche in die Eckbeschläge der Container 2 eingreifende Verriegelungselemente wie beispielsweise so genannte Twistlocks. Die externen Transportfahrzeuge können beispielsweise konventionelle als Sattelzüge ausgebildete Lkw sein und durch mindestens einen in der Begrenzung 1a vorgesehenen Passierbereich (nicht dargestellt) in die Umschlaganlage 1 ein- und ausfahren, um Container 2 anzuliefern oder abzuholen. Der Passierbereich kann eine Sicherheitsschleuse zum An- und Abmelden einschließlich einer Identifikation der ein- und ausfahrenden manuell geführten externen Transportfahrzeuge und deren Fahrer aufweisen.

Wenn eine Übergabe eines Containers 2 an ein Transportfahrzeug mit Ladefläche erfolgen soll, kann die Mindestfläche eines Übergabebereichs X gegenüber derjenigen bei Portalhubgeräten 7a, 7b abweichen. Dies ist dann entsprechend von dem Steuerungssystem beziehungsweise dessen Sicherheitssteuerungen 8 und/oder 10 zu berücksichtigen. Auch kann hierbei eine Berechtigung zur Einfahrt gewährt werden, obwohl das Transportfahrtzeug mit Ladefläche oder das Portalhubgerät 7a, 7b den Übergabebereich X noch nicht verlassen hat. Hier kann dann jedoch erforderlich sein, dass beispielsweise über das entsprechende Positionserfassungssystem 11 das Erreichen einer Sollposition des zuerst in den Übergabebereich X einfahrenden internen Transportfahrzeugs erkannt wird. Bei externen Transportfahrzeugen, die kein Positionserfassungssystem 11 aufweisen und/oder keine in das Steuerungssystem der Umschlaganlage 1 einbindbare fahrzeugseitige Sicherheitssteuerung 10 aufweisen, können dann über stationäre Sensoriken, insbesondere Positionserfassungssysteme, das Erreichen entsprechender Sollpositionen erkannt werden. Da ein erfindungsgemäßer Eingriff in die Fahrzeugsteuerung externer Transportfahrzeuge nicht möglich ist, kann vorgesehen sein, dass ein internes Transportfahrzeug erst dann in die Übergabezone C beziehungsweise deren jeweiligen Übergabebereich X einfahren darf, nachdem das externe Transportfahrzeug seine Sollposition erreicht hat, dies erkannt wird und somit dem Steuerungssystem bekannt ist. Hierbei kann auch ein Quittieren des Fahrers des externen Transportfahrzeugs erforderlich sein. Erst anschließend wird dem internen Transportfahrzeug eine Berechtigung zur Einfahrt in den Übergabebereich X gewährt, um das dort wartende externe Transportfahrzeug zu be- oder entladen.

Zum Bewirtschaften des Lagers 6, das heißt zum Ein- und Auslagern der Container 2 in dem Lager 6 können zusätzlich auch die als Portalkrane ausgebildeten und oben bereits erwähnten Stapelkrane vorgesehen sein, die als Umschlaggeräte dienen und Container 2 von den Portalhubgeräten 7a, 7b oder von internen beziehungsweise externen Transportfahrzeugen mit Ladefläche übernehmen beziehungsweise an diese übergeben. Auch eine Anbindung an Schienenverkehr ist auf diese Weise in der Umschlaganlage 1 möglich.

### Bezugszeichenliste

- 1: Umschlaganlage
- 1a: Begrenzung
- 2: Container
- 3: Kai
- 4: Schiff
- 5: Containerbrücke
- 6: Lager
- 6a: Lagerbereich
- 7a: automatisch geführtes Portalhubgerät
- 7b: manuell geführtes Portalhubgerät
- 8: zentrale Sicherheitsteuerung
- 9: Fahrzeugsteuerung
- 10: fahrzeugseitige Sicherheitssteuerung
- 11: Positionserfassungssystem
- 12: Kommunikationsverbindung
- 13: Fahrwerkträger
- 14: Rad
- 15: Fahrerkabine
- 16: Portalrahmen
- 16a: Portalstütze
- 16b: Oberrahmen
- 17: Ampelanlage
- 21-29: Fahrspuren der Übergabezone C

- A: Automatik-Bereich
- B: Manuell-Bereich
- C: Übergabezone
- L: Längsrichtung
- S: Steuerleitung
- X: Übergabebereich
- X1: erster Übergabebereich
- X2: zweiter Übergabebereich

## Patentansprüche

1. Verfahren zur Steuerung des Befahrens einer Übergabezone (C) mit einem Übergabebereich (X, X1, X2) für Container (2) von Transportfahrzeugen für Container (2), insbesondere Portalhubgeräten (7a, 7b), wobei die Übergabezone (C) einen Automatik-Bereich (A) für automatisch geführte Transportfahrzeuge mit einem Manuell-Bereich (B) für manuell geführte Transportfahrzeuge verbindet und die Transportfahrzeuge die Übergabezone (C) befahren, um einen Container (2) in dem Übergabebereich (X, X1, X2) zwischen zwei zeitgleich in dem Übergabebereich (X, X1, X2) befindlichen Transportfahrzeugen unmittelbar zu übergeben oder zu übernehmen oder um einen Container (2) in dem Übergabebereich (X, X1, X2) außerhalb eines Transportfahrzeugs abzustellen bevor der Container anschließend von einem anderen Transportfahrzeug aufgenommen und damit dieses Transportfahrzeug mit dem Container beladen wird, wobei den Transportfahrzeugen zum Befahren der Übergabezone (C) eine Berechtigung zur Einfahrt in die Übergabezone (C) gewährt oder verwehrt wird, wobei ohne gewährte Berechtigung zur Einfahrt eines manuell geführten Transportfahrzeugs, insbesondere Portalhubgeräts (7b), in die Übergabezone (C) automatisch ein Eingriff in eine Fahrzeugsteuerung (9) des Transportfahrzeugs derart erfolgt, dass zumindest eine vollständige Einfahrt, vorzugsweise jedoch selbst eine teilweise Einfahrt, in die Übergabezone (C) verhindert wird.

2. Verfahren nach Anspruch 1, **dadurch gekennzeichnet, dass** der Eingriff erfolgt, wenn das Transportfahrzeug sich der Übergabezone (C) mit einem kritischem Bewegungsprofil nähert, ohne eine gewährte Berechtigung zur Einfahrt in die Übergabezone (C), insbesondere in einen Übergabebereich (X, X1, X2) hiervon, erhalten zu haben.

3. Verfahren nach Anspruch 1 oder 2, **dadurch gekennzeichnet, dass** der Eingriff eine Vorgabe einer Geschwindigkeitsbegrenzung für das Transportfahrzeug umfasst.

4. Verfahren nach einem der Ansprüche 1 bis 3, **dadurch gekennzeichnet, dass** der Übergabebereich (X, X1, X2) so definiert wird, dass er zumindest eine erste Fahrspur (23, 27) der Übergabezone (C) umfasst, die den Automatik-Bereich (A) mit dem Manuell-Bereich (B) verbindet und vorzugsweise der Übergabebereich (X, X1, X2) so definiert wird, dass er sich über zwei weitere benachbarte Fahrspuren (22, 24, 26, 28) zumindest anteilig, vorzugsweise jeweils hälftig, erstreckt, die jeweils an die erste Fahrspur (23, 27) angrenzen und den Automatik-Bereich (A) mit dem Manuell-Bereich (B) verbinden.

5. Verfahren nach einem der Ansprüche 1 bis 4, **dadurch gekennzeichnet, dass** eine Anfrage eines Transportfahrzeugs erforderlich ist, um eine Berechtigung zur Einfahrt in die Übergabezone (C) und insbesondere einen Übergabebereich (X, X1, X2) der Übergabezone (C) zu erhalten.

6. Verfahren nach einem der Ansprüche 1 bis 5, **dadurch gekennzeichnet, dass** die Berechtigung zur Einfahrt in einen Übergabebereich (X, X1, X2) der Übergabezone (C) gewährt wird, wenn der Übergabebereich (X, X1, X2) sich in einem neutralen Bereitschaftszustand befindet, und die Berechtigung zur Einfahrt in den Übergabebereich (X, X1, X2) verwehrt wird, wenn der Übergabebereich (X, X1, X2) zumindest teilweise für ein anderes Transportfahrzeug geblockt ist.

7. Verfahren nach einem der Ansprüche 1 bis 6, **dadurch gekennzeichnet, dass** nacheinander zwei Transportfahrzeugen, von denen ein Transportfahrzeug manuell geführt und ein Transportfahrzeug automatisch geführt ist, jeweils eine Berechtigung zur Einfahrt in einen Übergabebereich (X, X1, X2) der Übergabezone (C) gewährt wird, um einen Container (2) für einen Transport von dem Automatik-Bereich (A) in den Manuell-Bereich (B) oder umgekehrt abzugeben beziehungsweise aufzunehmen.

8. Steuerungssystem zur Steuerung des Befahrens einer Übergabezone (C) mit einem Übergabebereich (X, X1, X2) für Container (2) von Transportfahrzeugen für Container (2), insbesondere Portalhubgeräten (7a, 7b), wobei die Übergabezone (C) einen Automatik-Bereich (A) für automatisch geführte Transportfahrzeuge mit einem Manuell-Bereich (B) für manuell geführte Transportfahrzeuge verbindet und die Transportfahrzeuge die Übergabezone (C) befahren, um einen Container (2) in dem Übergabebereich (X, X1, X2) zwischen zwei zeitgleich in dem Übergabebereich (X, X1, X2) befindlichen Transportfahrzeugen unmittelbar zu übergeben oder zu übernehmen oder um einen Container (2) in dem Übergabebereich (X, X1, X2) außerhalb eines Transportfahrzeugs abzustellen oder den abgestellten Container (2) aufzunehmen, und das Steuerungssystem ausgebildet ist, um den Transportfahrzeugen zum Befahren der Übergabezone (C) eine Berechtigung zur Einfahrt in die Übergabezone (C) zu gewähren oder zu verwehren, **dadurch gekennzeichnet, dass** das Steuerungssystem ausgebildet ist, um ein Verfahren nach einem der Ansprüche 1 bis 7 durchzuführen.

9. Steuerungssystem nach Anspruch 8, **dadurch gekennzeichnet, dass** das Steuerungssystem eine Sicherheitssteuerung (10) und eine Fahrzeugsteuerung (9) des Transportfahrzeugs, insbesondere automatisch oder manuell geführten Portalhubgeräts (7a, 7b), umfasst und die Sicherheitssteuerung (10) des Transportfahrzeugs mit der Fahrzeugsteuerung (9) zusammenwirkt, um ohne gewährte Berechtigung zur Einfahrt den Eingriff in die Fahrzeugsteuerung (9) vorzunehmen.

10. Steuerungssystem nach Anspruch 8 oder 9, **dadurch gekennzeichnet, dass** das Steuerungssystem eine zentrale Sicherheitssteuerung (8) aufweist, um auf die Anfrage des Transportfahrzeugs eine Berechtigung zur Einfahrt in die Übergabezone (C) und insbesondere einen Übergabebereich (X, X1, X2) der Übergabezone (C) zu gewähren oder zu verwehren.

11. Steuerungssystem nach einem der Ansprüche 8-10, **dadurch gekennzeichnet, dass** das Steuerungssystem ein Positionserfassungssystem (11) aufweist, um zu erkennen, wenn sich ein Transportfahrzeug der Übergabezone (C) und/oder einem in der Übergabezone (C) definierten Übergabebereich (X, X1, X2) mit einem kritischen Bewegungsprofil nähert.

12. Umschlaganlage (1) für Container (2) mit einer Übergabezone (C) für Container (2), die einen Automatik-Bereich (A) für automatisch geführte Transportfahrzeuge mit einem Manuell-Bereich (B) für manuell geführte Transportfahrzeuge verbindet, **dadurch gekennzeichnet, dass** die Umschlaganlage (1) ein Steuerungssystem nach einem der Ansprüche 8 bis 11 aufweist.

13. Umschlaganlage (1) nach Anspruch 12, **dadurch gekennzeichnet, dass** in der Übergabezone (C) zumindest ein Übergabebereich (X, X1, X2) definierbar ist, der an seinen Grenzen zum Automatik-Bereich (A) und zum Manuell-Bereich (B) barrierefrei ausgebildet ist.

## Claims

1. Method for controlling travel in a transfer zone (C) having a transfer area (X, X1, X2) for containers (2) by transport vehicles for containers (2), in particular gantry lift devices (7a, 7b), wherein the transfer zone (C) connects an automated area (A) for automated guided transport vehicles to a manual area (B) for manually guided transport vehicles and the transport vehicles travel in the transfer zone (C) in order to directly transfer or receive a container (2) in the transfer area (X, X1, X2) between two transport vehicles which are located in the transfer area (X, X1, X2) at the same time, or to place a container (2) in the transfer area (X, X1, X2) outside of a transport vehicle before the container is then picked up by another transport vehicle and thus this transport vehicle is loaded with the container, wherein authorisation to enter the transfer zone (C) is granted or denied to the transport vehicles to travel in the transfer zone (C), wherein in the absence of a granted authorisation for a manually guided transport vehicle, in particular a gantry lift device (7b), to enter the transfer zone (C), intervention in a vehicle controller (9) of the transport vehicle automatically occurs such that at least complete entry, but preferably even partial entry, into the transfer zone (C) is prevented.

2. Method as claimed in claim 1, **characterised in that** the intervention occurs when the transport vehicle approaches the transfer zone (C) with a critical movement profile without having obtained a granted authorisation to enter the transfer zone (C), in particular a transfer area (X, X1, X2) thereof.

3. Method as claimed in claim 1 or 2, **characterised in that** the intervention includes setting a speed limit for the transport vehicle.

4. Method as claimed in any one of claims 1 to 3, **characterised in that** the transfer area (X, X1, X2) is defined such that it includes at least a first lane (23, 27) of the transfer zone (C) which connects the automated area (A) to the manual area (B) and preferably the transfer area (X, X1, X2) is defined such that it extends over at least portions, preferably half, of two further adjacent lanes (22, 24, 26, 28) which adjoin the first lane (23, 27) and connect the automated area (A) to the manual area (B).

5. Method as claimed in any one of claims 1 to 4, **characterised in that** a request by a transport vehicle is necessary in order to obtain authorisation to enter the transfer zone (C) and in particular a transfer area (X, X1, X2) of the transfer zone (C).

6. Method as claimed in any one of claims 1 to 5, **characterised in that** authorisation to enter a transfer area (X, X1, X2) of the transfer zone (C) is granted if the transfer area (X, X1, X2) is in a neutral state of readiness, and the authorisation to enter the transfer area (X, X1, X2) is denied if the transfer area (X, X1, X2) is blocked at least partially for another transport vehicle.

7. Method as claimed in any one of claims 1 to 6, **characterised in that** authorisation to enter a transfer area (X, X1, X2) of the transfer zone (C) is granted for two transport vehicles, of which one transport vehicle is manually guided and one transport vehicle is guided in an automated manner, one after the other in order to set down or pick up a container (2) for transport from the automated area (A) to the manual area (B) or vice-versa.

8. Control system for controlling travel in a transfer zone (C) having a transfer area (X, X1, X2) for containers (2) by transport vehicles for containers (2), in particular gantry lift devices (7a, 7b), wherein the transfer zone (C) connects an automated area (A) for automated guided transport vehicles to a manual area (B) for manually guided transport vehicles and the transport vehicles travel in the transfer zone (C) in order to directly transfer or receive a container (2) in the transfer area (X, X1, X2) between two transport vehicles which are located in the transfer area (X, X1, X2) at the same time, or to place a container (2), or pick up the placed container (2), in the transfer area (X, X1, X2) outside of a transport vehicle, and the control system is configured to grant or deny authorisation to enter the transfer zone (C) to the transport vehicles to travel in the transfer zone (C), **characterised in that** the control system is configured to perform a method as claimed in any one of claims 1 to 7.

9. Control system as claimed in claim 8, **characterised in that** the control system includes a safety controller (10) and a vehicle controller (9) of the transport vehicle, in particular an automated guided or manually guided gantry lift device (7a, 7b), and the safety controller (10) of the transport vehicle cooperates with the vehicle controller (9) in order to effect intervention in the vehicle controller (9) in the absence of granted authorisation to enter.

10. Control system as claimed in claim 8 or 9, **characterised in that** the control system comprises a central safety controller (8) in order to grant or deny authorisation to enter the transfer zone (C) and in particular a transfer area (X, X1, X2) of the transfer zone (C) upon request by the transport vehicle.

11. Control system as claimed in any one of claims 8 to 10, **characterised in that** the control system comprises a position detection system (11) in order to recognise when a transport vehicle approaches the transfer zone (C) and/or a transfer area (X, X1, X2) defined in the transfer zone (C) with a critical movement profile.

12. Handling plant (1) for containers (2) having a transfer zone (C) for containers (2) which connects an automated area (A) for automated guided transport vehicles to a manual area (B) for manually guided transport vehicles, **characterised in that** the handling plant (1) comprises a control system as claimed in any one of claims 8 to 11.

13. Handling plant (1) as claimed in claim 12, **characterised in that** at least one transfer area (X, X1, X2) can be defined in the transfer zone (C), which transfer area is formed without any barriers at its boundaries to the automated area (A) and to the manual area (B).

## Revendications

1. Procédé de commande de la circulation de véhicules de transport de conteneurs (2), en particulier de dispositifs de levage à portique (7a, 7b), dans une zone de transfert (C) comprenant une région de transfert (X, X1, X2) destinées à des conteneurs (2), la zone de transfert (C) reliant une région automatique (A), destinée à des véhicules de transport à guidage automatique, à une région manuelle (B), destinée à des véhicules de transport à guidage manuel, et les véhicules de transport circulant dans la zone de transfert (C) afin de prendre en charge ou transférer directement un conteneur (2) dans la région de transfert (X, X1, X2) entre deux véhicules de transport situés en même temps dans la région de transfert (X, X1, X2) ou pour déposer un conteneur (2) dans la région de transfert (X, X1, X2) à l'extérieur d'un véhicule de transport avant que le conteneur ne soit ensuite récupéré par un autre véhicule de transport et que ce véhicule de transport ne soit ensuite chargé avec le conteneur, une autorisation d'entrer dans la zone de transfert (C) étant accordée ou refusée aux véhicules de transport pour circuler dans la zone de transfert (C), sans autorisation accordée à un véhicule de transport à guidage manuel, en particulier à un dispositif de levage à portique (7b), d'entrer dans la zone de transfert (C), une intervention étant effectuée automatiquement dans une commande de véhicule (9) du véhicule de transport de façon à empêcher au moins une entrée complète, mais de préférence même une entrée partielle, dans la zone de transfert (C).

2. Procédé selon la revendication 1, **caractérisé en ce que** l'intervention est effectuée lorsque le véhicule de transport s'approche de la zone de transfert (C) avec un profil de déplacement critique, sans autorisation accordée d'entrer dans la zone de transfert (C), notamment dans un région de transfert (X, X1, X2) de celle-ci.

3. Procédé selon la revendication 1 ou 2, **caractérisé en ce que** l'intervention comprend une spécification d'une limite de vitesse du véhicule de transport.

4. Procédé selon l'une des revendications 1 à 3, **caractérisé en ce que** la région de transfert (X, X1, X2) est définie de façon à comprendre au moins une première voie de roulement (23, 27) de la zone de transfert (C) qui relie la région automatique (A) à la région manuelle (B) et de préférence la région de transfert (X, X1, X2) est définie de façon à s'étendre sur deux autres voies de roulement adjacentes (22, 24, 26, 28) au moins en partie, de préférence sur la moitié, qui sont chacune adjacentes à la première voie de roulement (23, 27) et qui relient la région automatique (A) à la région manuelle (B).

5. Procédé selon l'une des revendications 1 à 4, **caractérisé en ce qu'**une demande d'un véhicule de transport est nécessaire pour obtenir une autorisation d'entrer dans la zone de transfert (C) et en particulier dans une région de transfert (X, X1, X2) de la zone de transfert (C).

6. Procédé selon l'une des revendications 1 à 5, **caractérisé en ce que** l'autorisation d'entrer dans une région de transfert (X, X1, X2) de la zone de transfert (C) est accordée si la région de transfert (X, X1, X2) est dans un état de disponibilité neutre et l'autorisation d'entrer dans la région de transfert (X, X1, X2) est refusée si la région de transfert (X, X1, X2) est au moins partiellement bloquée pour un autre véhicule de transport.

7. Procédé selon l'une des revendications 1 à 6, **caractérisé en ce qu'**une autorisation d'entrée dans une région de transfert (X, X1, X2) de la zone de transfert (C) est successivement accordée à deux véhicules de transport, dont un véhicule de transport est guidé manuellement et un véhicule de transport est guidé automatiquement, pour déposer ou récupérer un conteneur (2) pour le transporter de la région automatique (A) à la région manuelle (B) ou vice versa.

8. Système de commande de la circulation de véhicules de transport de conteneurs (2), en particulier de dispositifs de levage à portique (7a, 7b), dans une zone de transfert (C) comprenant une région de transfert (X, X1, X2) destinée à des conteneurs (2), la zone de transfert (C) reliant une région automatique (A), destinées à des véhicules de transport à guidage automatique, à une zone manuelle (B) destinées à des véhicules de transport à guidage manuel et les véhicules de transport circulant dans la zone de transfert (C) afin de prendre en charge ou transférer directement un conteneur (2) dans la région de transfert (X, X1, X2) entre deux véhicules de transport situés en même temps dans la région de transfert (X, X1, X2) ou pour déposer un conteneur (2) dans la région de transfert (X, X1, X2) à l'extérieur d'un véhicule de transport ou pour recevoir le conteneur déposé (2), et le système de commande étant conçu pour accorder ou refuser aux véhicules de transport l'autorisation d'entrer dans la zone de transfert (C) pour circuler dans la zone de transfert (C), caractérisé en en ce que le système de commande est conçu pour mettre en oeuvre un procédé selon l'une des revendications 1 à 7.

9. Système de commande selon la revendication 8, **caractérisé en ce que** le système de commande comporte une commande de sécurité (10) et une commande de véhicule (9) du véhicule de transport, notamment d'un dispositif de levage à portique à guidage automatique ou manuel (7a, 7b), et la commande de sécurité (10) du véhicule de transport coopérant avec la commande de véhicule (9) pour intervenir dans la commande de véhicule (9) sans autorisation d'entrée accordée.

10. Système de commande selon la revendication 8 ou 9, **caractérisé en ce que** le système de commande comporte une commande de sécurité centrale (8) destinée à autoriser ou refuser l'entrée dans la zone de transfert (C) et, en particulier une région de transfert (X, X1, X2) de la zone de transfert (C), en réponse à la demande du véhicule de transport.

11. Système de commande selon l'une des revendications 8 à 10, **caractérisé en ce que** le système de commande comporte un système de détection de position (11) destiné à détecter qu'un véhicule de transport s'approche, avec un profil de mouvement critique, de la zone de transfert (C) et/ou d'une région de transfert (X, X1, X2) définie dans la zone de transfert (C).

12. Installation de transfert (1) destiné à des conteneurs (2) et comprenant une zone de transfert (C) destinée à des conteneurs (2) et reliant une zone automatique (A), destinée à des véhicules de transport à guidage automatique, à une zone manuelle (B) destinées à des véhicules de transport à guidage manuel, **caractérisé en ce que** l'installation de transfert (1) comporte un système de commande selon l'une des revendications 8 à 11.

13. Installation de transfert (1) selon la revendication 12, **caractérisée en ce qu'**au moins une région de transfert (X, X1, X2) peut être définie dans la zone de transfert (C) et est formée sans barrière au niveau de ses frontières avec la région automatique (A) et la région manuelle (B).
